# EUROPEAN PATENT APPLICATION

(11) **EP 4 574 298 A1**
(43) Date of publication of application: **25.06.2025**
(21) Application number: 23854706.1
(22) Date of filing: 19.06.2023
(51) Int. Cl.: B21F 35/00, B21F 11/00

(54) **COILING MACHINE AND COIL SPRING MANUFACTURING METHOD**

(30) Priority: 15.08.2022 JP 2022129255
(71) Applicant: NHK Spring Co., Ltd., Yokohama-shi, Kanagawa 236-0004 (JP)
(72) Inventor: IWATA, Hisashi, Yokohama-shi, Kanagawa 236-0004 (JP); ICHIKAWA, Shogo, Yokohama-shi, Kanagawa 236-0004 (JP); YAMAUCHI, Yuichiro, Yokohama-shi, Kanagawa 236-0004 (JP); TANAKA, Ryo, Yokohama-shi, Kanagawa 236-0004 (JP)
(74) Representative: AWA Sweden AB
(86) International application number: PCT/JP2023/022576
(87) International publication number: WO 2024/038668

(57) **Abstract**

A coiling machine comprises a feed unit configured to feed a wire in a feed direction, a helix formation unit configured to bend the wire fed by the feed unit in a perpendicular direction in series, thereby forming a coil spring extending into a helical shape toward a formation direction, a laser heater configured to heat a portion of the wire by emitting laser light to the wire which is bent by the helix formation unit, and a cutting unit configured to cut a site of the wire heated by the laser light. When, relative to an irradiation area irradiated with the laser light in the wire, the formation direction is defined as 0°, and an opposite side of the feed direction is defined as 90°, and an opposite side of the formation direction is defined as 180°, and the feed direction is defined as 270°, an irradiation direction of the laser light by the laser heater forms a first angle which is greater than or equal to 0° and less than or equal to 270° with the formation direction.

## Description

### Technical Field

The present invention relates to a coiling machine for manufacturing a coil spring and a coil spring manufacturing method.

### Background Art

As a device for manufacturing a coil spring, for example, the coil spring forming machine described in Patent Literature 1 is known. This coil spring forming machine calculates the position of the cut site based on the length of a wire formed into a helical shape in advance and cuts the wire in a state where the cut site is softened by high-frequency heating.

Meanwhile like the spring manufacturing device described in Patent Literature 2, a coiling machine which cuts a wire formed into a helical shape by laser light is also known.

In a case where high-frequency heating is used like the coil spring forming machine of Patent Literature 1, the responsiveness of the heating of the cut site is not good. In addition, in the coil spring forming machine, as the wire is cut in a state where the hating of the cut site by high-frequency heating is continued, the members used for cutting may be affected by high-frequency heating. Further, in the coil spring forming machine, the responsiveness of high-frequency heating is not satisfactory, and the wire is coiled up in a state where the wire is partly heated. Therefore, it may be difficult to stabilize the formation accuracy of the spring.

On the other hand, the spring manufacturing device of Patent Literature 2 requires high-power laser light which can cut a wire. In this case, sputter may occur because of irradiation with laser light, and further, laser light may be applied to each unit of the spring manufacturing device as well as the wire. Therefore, measures for these problems need to be taken.

In consideration of these matters, the applicant of the present application suggests the method of cutting a site of a wire heated by laser light by a cutting member such as a cutter as described in Patent Literature 3. By this method, the wire can be easily cut, and further, a coil spring having a good cutting surface can be obtained.

### Citation List

### Patent Literatures

Patent Literature 1: JP S62-50028 A
Patent Literature 2: JP H6-218476 A
Patent Literature 3: JP 7066880 B

### Summary of Invention

### Technical Problem

The method of cutting a site of a wire heated by laser light by a cutting member as described above has room for improvement in various ways. For example, the irradiation direction of laser light for the irradiation position of a wire needs to be appropriately determined in consideration of the efficiency of heating and interference with various members.

One of the objects of the present invention is to provide a coiling machine and a coil spring manufacturing method for enabling the improvement of the manufacturing efficiency of a coil spring and the improvement of the efficiency of the layout of various elements for manufacturing a coil spring.

### Solution to Problem

The coiling machine related to the present invention comprises a feed unit configured to feed a wire in a feed direction, a helix formation unit configured to bend the wire fed by the feed unit in a perpendicular direction orthogonal to the feed direction in series, thereby forming a coil spring extending into a helical shape toward a formation direction orthogonal to the feed direction and the perpendicular direction, a laser heater configured to heat a portion of the wire by emitting laser light to the wire which is bent by the helix formation unit, and a cutting unit configured to cut a site of the wire heated by the laser light.

The coil spring manufacturing method related to the present invention comprises feeding a wire in a feed direction, bending the fed wire in a perpendicular direction orthogonal to the feed direction in series, thereby forming a coil spring extending into a helical shape toward a formation direction orthogonal to the feed direction and the perpendicular direction, heating a portion of the wire by emitting laser light to the bent wire, and cutting a site of the wire heated by the laser light.

According to an aspect of the present invention, when, relative to an irradiation area irradiated with the laser light in the wire, the formation direction is defined as 0°, and an opposite side of the feed direction is defined as 90°, and an opposite side of the formation direction is defined as 180°, and the feed direction is defined as 270°, an irradiation direction of the laser light by the laser heater forms a first angle which is greater than or equal to 0° and less than or equal to 270° with the formation direction.

According to another aspect of the present invention, when, relative to an irradiation area irradiated with the laser light in the wire, the perpendicular direction is defined as 0°, and the formation direction is defined as 90°, an irradiation direction of the laser light by the laser heater forms a second angle which is greater than or equal to 5° and less than or equal to 80° with the perpendicular direction.

The first angle should be desirably greater than or equal to 0° and less than or equal to 180°, and more desirably greater than or equal to 0° and less than or equal to 80°.

The second angle should be desirably greater than or equal to 5° and less than or equal to 45°.

### Advantageous Effects of Invention

The present invention can provide a coiling machine and a coil spring manufacturing method for enabling the improvement of the manufacturing efficiency of a coil spring and the improvement of the efficiency of the layout of various elements for manufacturing a coil spring.

### Brief Description of Drawings

FIG. 1 is a schematic perspective view showing the main portions of a coiling machine according to an embodiment.
FIG. 2 is a schematic front view of the coiling machine according to the embodiment.
FIG. 3 is a flowchart showing the operation of the coiling machine according to the embodiment.
FIG. 4 is a schematic perspective view showing a specific example of a helix formation process by the coiling machine according to the embodiment.
FIG. 5 is a schematic perspective view showing a specific example of a heating process by the coiling machine according to the embodiment.
FIG. 6 is a perspective view showing the first example of the method of heating and softening a portion of a wire in a heating process.
FIG. 7 is the cross-sectional view of the wire along the VII-VII line of FIG. 6.
FIG. 8 is a perspective view showing the second example of the method of heating and softening a portion of the wire in a heating process.
FIG. 9 is the cross-sectional view of the wire along the IX-IX line of FIG. 8.
FIG. 10 is a schematic perspective view showing a specific example of a cutting process by the coiling machine according to the embodiment.
FIG. 11 is a schematic cross-sectional view of the wire irradiated with laser light.
FIG. 12 is a cross-sectional view showing an example of the preferable positional relationships of a cutter, a mandrel and the irradiation area irradiated with laser light.
FIG. 13 is a cross-sectional view showing a state in which the cutter is moved downward from the state shown in FIG. 12 and the wire is cut.
FIG. 14 is a schematic side view of the coil spring cut from the wire by the method shown in FIG. 12 and FIG. 13.
FIG. 15 is a schematic plan view in which the coiling machine of the embodiment is viewed parallel to a perpendicular direction.
FIG. 16 is a schematic partial cross-sectional view in which the coiling machine of the embodiment is viewed parallel to a feed direction.
FIG. 17 is a schematic perspective view showing a coiling machine according to a modified example.

### Mode for Carrying Out the Invention

Embodiments related to a coiling machine and a coil spring manufacturing method are hereinafter explained with reference to the accompanying drawings.

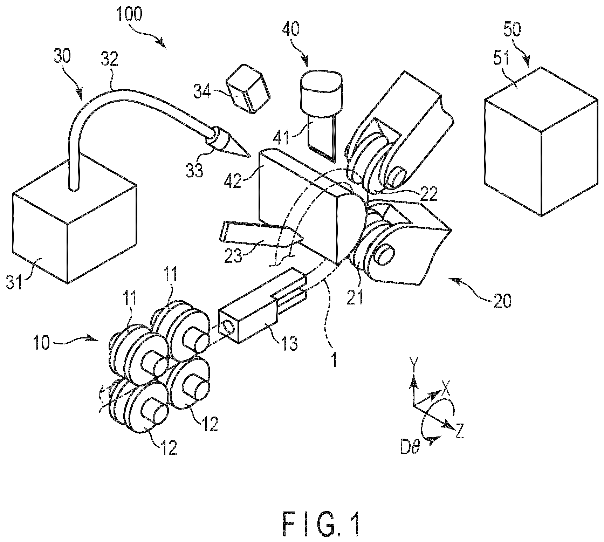

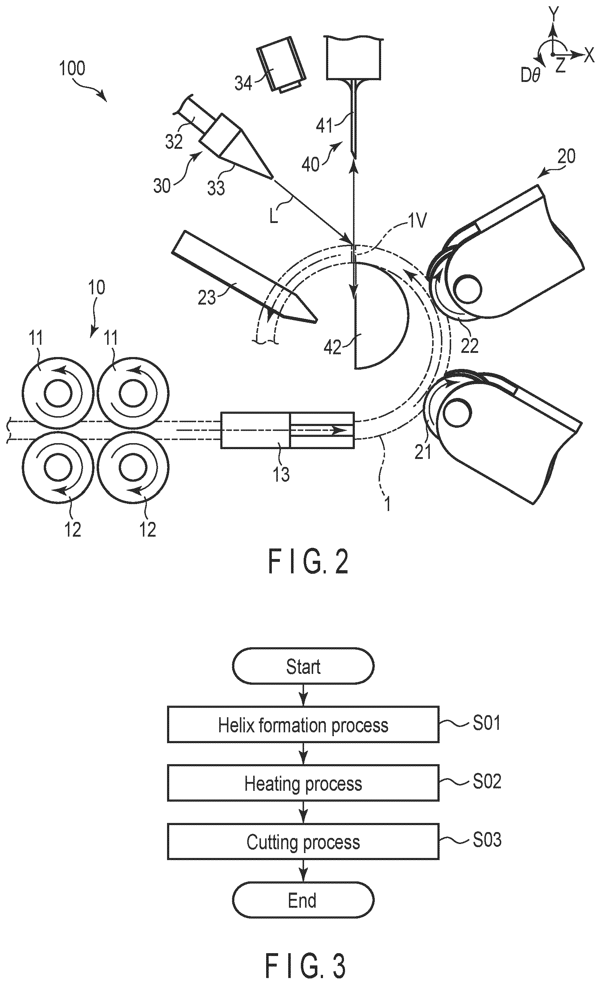

FIG. 1 is a schematic perspective view showing the main portions of a coiling machine 100 according to an embodiment. FIG. 2 is a schematic front view of the coiling machine 100 shown in FIG. 1. A feed direction X, a perpendicular direction Y, a formation direction Z and a circumferential direction Dθ are defined as shown in FIG. 1 and FIG. 2. The feed direction X, the perpendicular direction Y and the formation direction Z are orthogonal to each other. The feed direction X is a direction in which a linear wire 1 before formation into a helical shape is fed. The formation direction Z is a direction in which a coil spring consisting of the wire 1 which is bent into a helical shape extends (a direction in which the spring develops). The circumferential direction Dθ is a direction in which the wire 1 constituting the coil spring is wound.

The coiling machine 100 comprises a feed unit 10, a helix formation unit 20, a heating unit (laser heater 30), a cutting unit 40 and a control unit 50.

In the example of FIG. 1 and FIG. 2, the feed unit 10 comprises a pair of driving rollers 11, a pair of driven rollers 12 and a wire guide 13. The feed unit 10 may comprise more driving rollers 11 and driven rollers 12.

The driving rollers 11 face the driven rollers 12, respectively, via the wire 1. When each driving roller 11 rotates, a corresponding driven roller 12 rotates via the wire 1. In accordance with this rotation, the wire 1 interposed between the driving rollers 11 and the driven rollers 12 is fed in the feed direction X. The wire 1 is inserted into the wire guide 13. The wire guide 13 guides the wire 1 such that the wire 1 goes straight in the feed direction X, and guides the wire 1 to the helix formation unit 20.

The helix formation unit 20 forms the wire 1 fed by the feed unit 10 into a helical shape. In the example of FIG. 1 and FIG. 2, the helix formation unit 20 comprises a first formation roller 21, a second formation roller 22 and a pitch tool 23.

The first formation roller 21, the second formation roller 22 and the pitch tool 23 are provided in order in the circumferential direction Dθ. The positions of the first formation roller 21, the second formation roller 22 and the pitch tool 23 in the formation direction Z are different from each other.

The first formation roller 21 and the second formation roller 22 bend, in the perpendicular direction Y, the wire 1 fed in the feed direction X in series. The wire 1 which is bent in series in this manner draws an arc along the circumferential direction Dθ. The bent wire 1 is guided by the pitch tool 23 at a position deviating in the formation direction Z relative to the second formation roller 22.

The laser heater 30 emits laser light L to a portion of the wire 1 formed into a helical shape as shown in FIG. 2. By this irradiation with laser light L, a heated site 1V in which the temperature is higher than the other portion is formed in the wire 1.

In the example of FIG. 1 and FIG. 2, the laser heater 30 comprises a laser oscillator 31, an optical fiber 32 and a laser head 33. The laser head 33 includes, for example, a beam spot adjustment device.

For the laser oscillator 31, for example, a semiconductor laser which generates laser light L can be used. The optical fiber 32 transmits laser light L generated in the laser oscillator 31 to the laser head 33. The laser head 33 adjusts the beam shape of laser light L so as to be a rectangle or a circle by the beam spot adjustment device described above. For the beam spot adjustment device, for example, an optical element such as a beam homogenizer can be used.

The laser heater 30 may further comprise a measurement device 34 which measures the temperature of the heated site 1V. The measurement device 34 has, for example, a sensor which detects the temperature of the heated site 1V of the wire 1. The measurement device 34 may be provided on a lateral side of the cutting unit 40 to avoid interference with the cutting unit 40. The measurement device 34 may be configured to move away from a cutter 41 in cooperation with the operation of the cutter 41 to avoid interference with the cutter 41 described later. The measurement result by the measurement device 34 can be used to, for example, control the cut timing of the wire 1 by the cutting unit 40.

It should be noted that the measurement device 34 is not an essential configuration. In other words, without using the measurement device 34, various conditions related to the cutting of the wire 1 may be set in advance, and the cutting unit 40 may cut the heated site 1V based on the conditions.

The laser heater 30 may further comprise a movement stage which causes the laser head 33 to approach or move away from the heated site 1V of the wire 1. The movement stage may consist of, for example, a linear-motion stage or a robot hand. When the operation distance of the laser head 33 can be set so as to be sufficiently long, and interference with the cutting unit 40 can be avoided, the use of the movement stage is not necessary.

After the irradiation with laser light L is stopped, the cutting unit 40 cuts the heated site 1V of the wire 1 having a temperature higher than that before the irradiation with the laser light. In the example of FIG. 1 and FIG. 2, the cutting unit 40 comprises the cutter 41 and a mandrel 42.

The cutter 41 is provided between the second formation roller 22 and the pitch tool 23 in the circumferential direction Dθ. The cutter 41 has, at the distal end, for example, a sharp cutting blade in which the blade edge is parallel to the formation direction Z. The cutter 41 is configured such that it can be moved in the perpendicular direction Y by a drive mechanism (not shown).

The mandrel 42 is provided on the inner side of the first formation roller 21, the second formation roller 22 and the pitch tool 23. For example, as shown in FIG. 2, the mandrel 42 has a semicircular shape along an X-Y plane, and extends so as to be elongated in the formation direction Z. The mandrel 42 supports the inner circumferential surface of the wire 1 formed into a helical shape mainly in the end portion of the arc surface in the perpendicular direction Y.

The control unit 50 controls the feed unit 10, the helix formation unit 20, the laser heater 30 and the cutting unit 40. This control unit 50 comprises a controller 51.

The controller 51 includes a read only memory (ROM), a central processing unit (CPU) and a random access memory (RAM). The ROM stores a computer program for controlling the feed unit 10, the helix formation unit 20, the laser heater 30 and the cutting unit 40. The CPU runs the computer program stored in the ROM. The RAM temporarily stores various types of data generated in association with the run of the computer program while the computer program is run by the CPU.

Now, this specification explains the manufacturing method of a coil spring 2 using the coiling machine 100 of the present embodiment with reference to FIG. 3 to FIG. 13.

FIG. 3 is a flowchart showing the operation of the coiling machine 100. The operation shown in this flowchart is realized mainly as the controller 51 runs a computer program. The manufacturing process of the coil spring 2 by the coiling machine 100 includes a helix formation process S01, a heating process S02 and a cutting process S03.

In the helix formation process S01, the wire 1 is formed into a helical shape. In the heating process S02 subsequent to the completion of the helix formation process S01, laser light L is emitted to a portion of the wire 1, thereby forming the heated site V1 in the wire 1. The heated site 1V includes a portion which is softened relative to the other portion (base material) of the wire 1. In the cutting process S03 subsequent to the completion of the heating process S02, the heated site 1V of the wire 1 is cut.

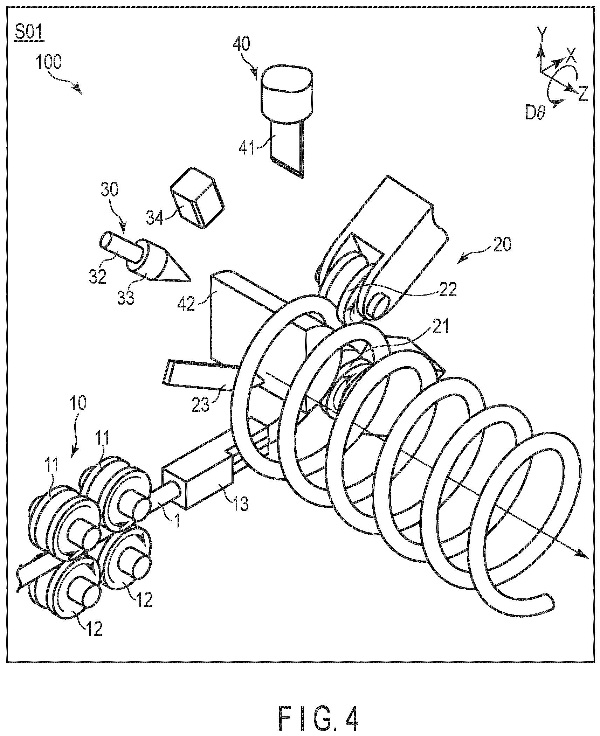

FIG. 4 is a schematic perspective view of the coiling machine 100 and shows a specific example of the helix formation process S01. In the helix formation process S01, the feed unit 10 guides the wire 1 to the wire guide 13 by causing the wire 1 to go straight in the feed direction X using the driving rollers 11 and the driven rollers 12. The wire 1 drawn from the wire guide 13 is bent in the perpendicular direction Y by the first formation roller 21 and the second formation roller 22 and is formed into an arc shape. The wire 1 formed into an arc shape is guided by the pitch tool 23 so as to be formed into a helical shape having a predetermined pitch. By this operation, the wire 1 having a helical shape gradually stretches in the formation direction Z.

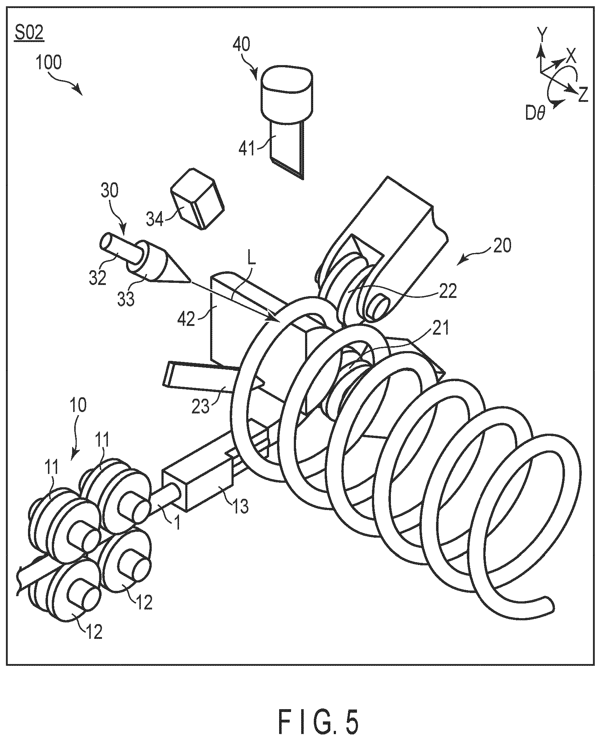

FIG. 5 is a schematic perspective view of the coiling machine 100 and shows a specific example of the heating process S02. In the heating process S02, the laser heater 30 directly emits laser light L to, for example, the portion located near the end portion of the mandrel 42 (under the cutter 41) in the perpendicular direction Y in the wire 1 formed into a helical shape. The base material of the wire 1 is heated by the energy of laser light L, and the softened heated site 1V is formed.

When the heating process S02 is performed, the feeding of the wire 1 by the feed unit 10 is stopped. The laser heater 30 is provided at, for example, a predetermined position in a fixed manner, and emits laser light L to a portion of the suspended wire 1 from that position. As another example, when the laser heater 30 has the movement stage described above, the laser heater 30 may move the laser head 33 closer to the wire 1 and then emit laser light L. In the heating process S02, the laser heater 30 may emit laser light L to the site of the wire 1 delivered in the circumferential direction Dθ without stopping the feeding of the wire 1 by the feed unit 10. In this case, the movement of the laser heater 30 may be controlled such that the irradiation position of laser light L is moved so as to follow the movement of the cut position by coiling.

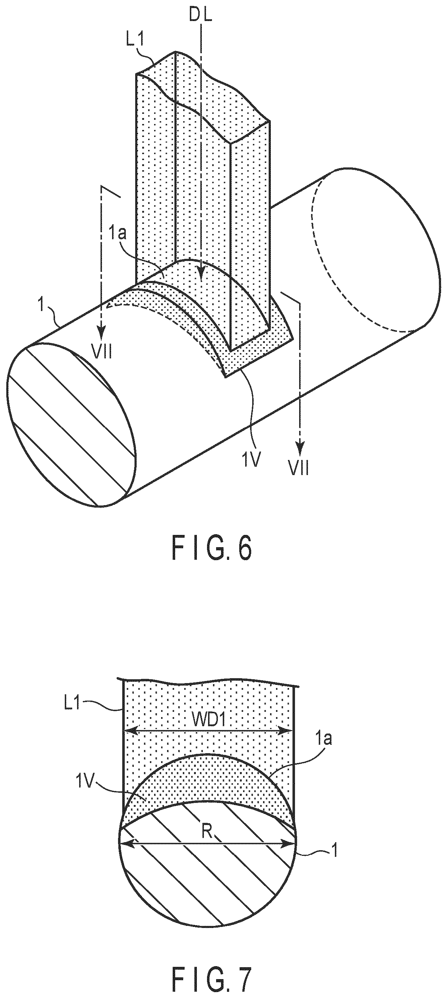

FIG. 6 is a perspective view of the wire 1 and shows the first example of the method of heating and softening a portion of the wire 1. In this example, the laser heater 30 emits laser light L1 to the surface of the wire 1 in an irradiation direction DL. This laser light L1 has, for example, a beam profile which is elongated in the width direction of the wire 1. In the irradiation area 1a of the wire 1 irradiated with laser light L1 and its vicinity, the heated site 1V is formed.

FIG. 7 is the cross-sectional view of the wire 1 along the VII-VII line of FIG. 6. The heated site 1V extends to the inside of the wire 1 as well as the surrounding area of the irradiation area 1a on the surface of the wire 1. In the example of this figure, width WD1 of laser light L1 in the width direction of the wire 1 is less than the diameter R of the wire 1. Therefore, laser light L1 is mostly applied to the wire 1.

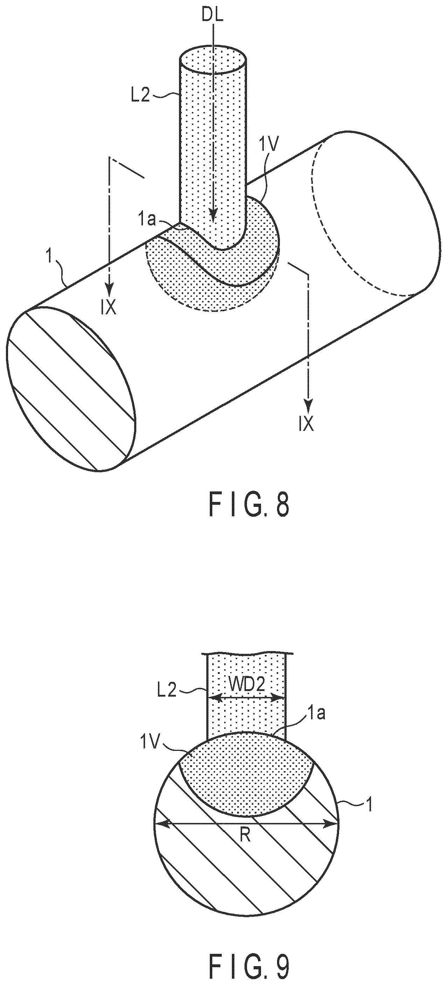

FIG. 8 is a perspective view of the wire 1 and shows the second example of the method of heating and softening a portion of the wire 1. In this example, the laser heater 30 emits laser light L2 to the surface of the wire 1 in the irradiation direction DL. Laser light L2 has, for example, a circular beam profile. In the irradiation area 1a of the wire 1 irradiated with this laser light L2 and its vicinity, the heated site 1V is formed in a manner similar to that of the first example.

FIG. 9 is the cross-sectional view of the wire 1 along the IX-IX line of FIG. 8. The heated site 1V extends to the inside of the wire 1 as well as the surrounding area of the irradiation area 1a on the surface of the wire 1. For example, width WD2 (diameter) of laser light L2 is less than the diameter R of the wire 1. Therefore, laser light L2 is mostly applied to the wire 1.

The heated site 1V may extend to the inside of the wire 1 more deeply than the examples shown in FIG. 7 and FIG. 9. The shape of laser light L emitted by the laser heater 30 is not limited to the first example and the second example.

In both the first example and the second example, the heated site 1V may include a melt pool in which the base material of the wire 1 is melted by the energy of laser light L. The melt pool may extend to the surrounding area of the irradiation area 1a as well as the irradiation area 1a.

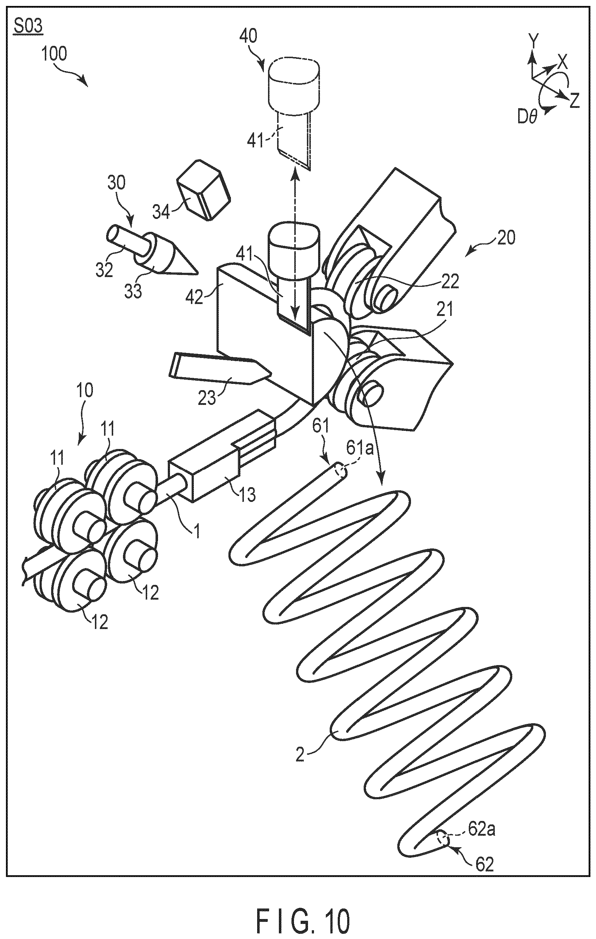

FIG. 10 is a schematic perspective view of the coiling machine 100 and shows a specific example of the cutting process S03. In this embodiment, the cutting process S03 is performed after the irradiation with laser light L is stopped. As another example, the cutting process S03 may be performed during the irradiation with laser light L. In the cutting process S03, the heated site 1V of the wire 1 in which the temperature is higher than that before the irradiation with laser light L is cut by the cutting unit 40. By this process, the coil spring 2 is manufactured.

Specifically, the cutter 41 descends toward the vicinity of the portion of the wire 1 supported by the mandrel 42 in the cutting process S03. At this time, the wire 1 is cut by the impact applied by the cutter 41.

In a case where the heated site 1V includes a melt pool, the melt pool may solidify during the period from the suspension of irradiation with laser light L until the start of the operation of the cutter 41. The melt pool may be solidified as the heat of the heated site 1V is taken by the cutter 41 when the cutter 41 comes into contact with the surface of the wire 1 after the operation of the cutter 41. Thus, as the melt pool solidifies before or during the operation of the cutter 41, the attachment of melted metal to the cutter 41 can be prevented.

In the cutting process S03, the cutter 41 may be operated based on the measurement result of the temperature of the heated site 1V by the measurement device 34. Specifically, the cutter 41 may operate when the temperature of the heated site 1V is decreased to the predetermined target temperature after the irradiation with laser light L. The target temperature may be, for example, a temperature at which the melted base material solidifies. As a matter of course, in the cutting process S03, the heated site 1V may be cut without using the measurement device 34 by determining in advance the delay time from the suspension of irradiation with laser light L until the start of the operation of the cutter 41.

The cut coil spring 2 has a first terminal 61 including a first end face 61a, and a second terminal 62 including a second end face 62a. After one coil spring 2 is manufactured, the helix formation process S01, heating process S02 and cutting process S03 described above are performed again, and thus, the next coil spring 2 is manufactured. Thus, each of the first terminal 61 and the second terminal 62 is cut through the processes descried above.

A shear force necessary for cutting the wire 1 decreases as the temperature of the wire 1 is increased by heating. Even if the wire 1 has not reached the melting point, the shear force can be decreased. Further, this tendency does not depend on the diameter of the wire 1. For example, when the wire 1 is cut by the cutter 41, the temperature of at least a portion of the heated site 1V should be desirably greater than or equal to 500°C.

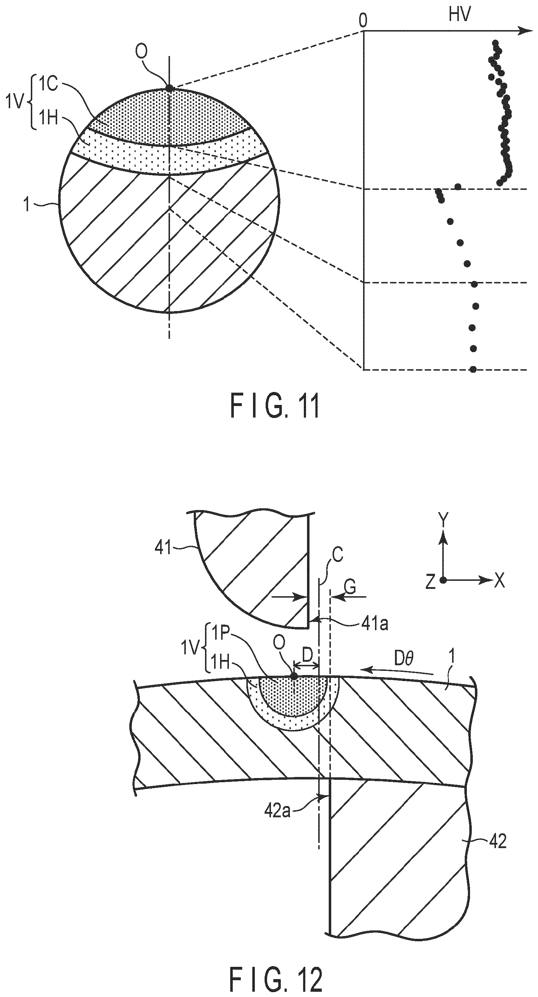

FIG. 11 is a schematic cross-sectional view of the wire 1 irradiated with laser light L. Here, this specification assumes a case where laser light L2 having the shape shown in FIG. 8 is emitted to the surface of the wire 1, and a melt pool is formed. In the figure, "O" indicates the center of the irradiation area 1a (see FIG. 6 and FIG. 8) irradiated with laser light L on the outer circumferential surface of the wire 1. For example, this irradiation center O corresponds to the position at which the peak portion having the highest intensity is irradiated in the beam profile of laser light L. The irradiation center O may be considered as the center of the melt pool.

As described above, when the wire 1 is irradiated with laser light L, the heated site 1V is formed. During the irradiation with laser light L or immediately after the irradiation, a melt pool is formed around the irradiation center O. By subsequent cooling, the melt pool is solidified, thereby forming a quench hardened portion 1C. Around the melt pool, a heat affected portion (heat affected zone [HAZ]) 1H is formed. The heat affected portion 1H has not been melted, but the property has been changed from the base material of the wire 1 by the heat applied at the time of the irradiation with laser light L. Thus, the heated site 1V includes the quench hardened portion 1C and the heat affected portion 1H.

FIG. 11 shows the result obtained by measuring the Vickers hardness [HV] of the quench hardened portion 1C, the heat affected portion 1H and the base material of the wire 1. The quench hardened portion 1C has a hardness which is greater than that of the base material as a whole. The heat affected potion 1H has a hardness which is less than that of the base material as a whole. The hardness of the heat affected portion 1H gradually increases from the vicinity of the quench hardened portion 1C to the base material.

Thus, similarly, the distribution of the hardness is nonuniform in the heated site 1V. Therefore, the relationships between the positions of the cutter 41 and the mandrel 42 and the irradiation area irradiated with laser light L need to be appropriately determined.

FIG. 12 is a cross-sectional view showing an example of the preferable positional relationships of the cutter 41, the mandrel 42 and the irradiation area irradiated with laser light L. In the helix formation process S01 described above, the wire 1 formed into a helical shape is delivered to the portion located between the cutter 41 and the mandrel 42. In this delivering direction (circumferential direction Dθ) of the wire 1, a clearance G is provided between an end portion 41a of the cutter 41 and an end portion 42a of the mandrel 42. Hereinafter, the center of the clearance G in the circumferential direction Dθ is referred to as a clearance center C.

In the example of FIG. 12, the clearance center C and the irradiation center O are out of alignment in the circumferential direction Dθ. Specifically, the irradiation center O is located on the cutter 41 side (the downstream side of the circumferential direction Dθ) relative to the clearance center C.

In the example of FIG. 12, the heated site 1V includes a melt pool 1P which becomes the quench hardened portion 1C described above after solidification. For example, the melt pool 1P overlaps the clearance center C. The melt pool 1P overlaps the end portion 41a of the cutter 41 in the perpendicular direction Y.

To the contrary, the melt pool 1P does not overlap the end portion 42a of the mandrel 42 in the perpendicular direction Y. In the example of FIG. 12, the end portion 42a of the mandrel 42 overlaps, of the heat affected portion 1H, the portion located on the upstream side of the circumferential direction Dθ relative to the melt pool 1P, in the perpendicular direction Y.

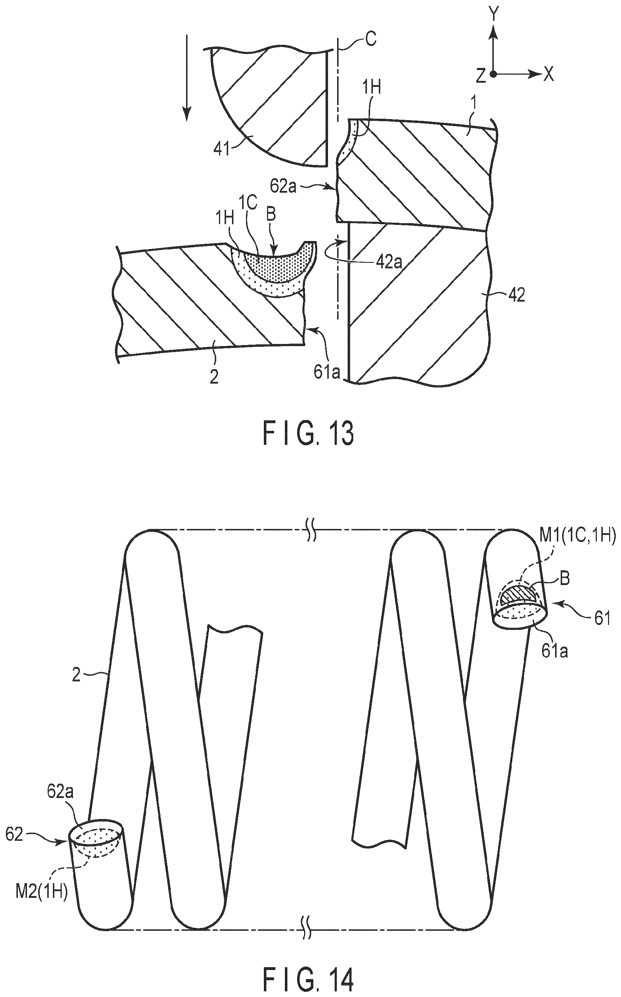

FIG. 13 is a cross-sectional view showing a state in which the cutter 41 is moved downward from the state shown in FIG. 12 parallel to the perpendicular direction Y and the wire 1 is cut. As described above, when the wire 1 is cut by the cutter 41, the melt pool 1P has already solidified, or the melt pool 1P is solidified as the heat is taken by contact with the cutter 41. Thus, the quench hardened portion 1C is formed during cutting. When cutting is performed, the melt pool 1P may partly remain inside the heated site 1V.

When the distal end portion of the cutter 41 applies an impact to the outer circumferential surface of the wire 1 which protrudes from the end portion 42a of the mandrel 42, a shear force is applied to the heated site 1V and its vicinity, and thus, the wire 1 is broken and cut. For example, the cutter 41 descends to the vicinity of the axis of the wire 1 at the maximum. In the cut wire 1, in other words, the coil spring 2, a dent (recess portion) B by the cutter 41 is formed. In the example of FIG. 13, the quench hardened portion 1C and the heat affected portion 1H overlap the dent B. However, they may be misaligned with each other.

As described above, the heat affected portion 1H is softer than the quench hardened portion 1C and the base material of the wire 1. Therefore, when the cutter 41 applies an impact to the wire 1, the heat affected portion 1H is easily broken and cut in the heated site 1V. In particular, if the irradiation center O is displaced on the cutter 41 side relative to the clearance center C as shown in FIG. 12, a load can be effectively applied to, of the heat affected portion 1H, the portion located on the upstream side of the circumferential direction Dθ relative to the melt pool 1P, and thus, the wire 1 can be broken and cut along this portion.

FIG. 14 is a schematic side view of the coil spring 2 cut from the wire 1 by the method shown in FIG. 12 and FIG. 13. The coil spring 2 has the first terminal 61 including the first end face 61a, and the second terminal 62 including the second end face 62a.

The first end face 61a corresponds to the fracture surface of the coil spring 2 which is separated from the wire 1 in FIG. 13. The first terminal 61 has the first irradiation trace M1 of laser light L, and the dent B of the cutter 41. The first irradiation trace M1 includes the quench hardened portion 1C and the heat affected portion (first heat affected portion) 1H.

The second end face 62a corresponds to the fracture surface of the wire 1 which remains above the mandrel 42 when the coil spring 2 manufactured before the above coil spring 2 is separated. The second terminal 62 has the second irradiation trace M2 of laser light L. The second irradiation trace M2 includes the heat affected portion (second heat affected portion) 1H. When the wire 1 is cut as shown in FIG. 13, the second irradiation trace M2 does not include the quench hardened portion 1C. However, the second irradiation trace M2 may include, for example, a less amount of quench hardened portion 1C than the first irradiation trace M1.

The heat affected portion 1H included in the first irradiation trace M1 extends to at least a portion of the first end face 61a. The heat affected portion 1H included in the second irradiation trace M2 extends to at least a portion of the second end face 62a. To the contrary, the quench hardened portion 1C included in the first irradiation trace M1 does not extend to the first end face 61a. It should be noted that a portion of the quench hardened portion 1C may extend to the first end face 61a. In this case, on the first end face 61a, the area of the quench hardened portion 1C should be desirably less than that of the heat affected portion 1H.

Now, this specification explains the irradiation direction DL of laser light L.

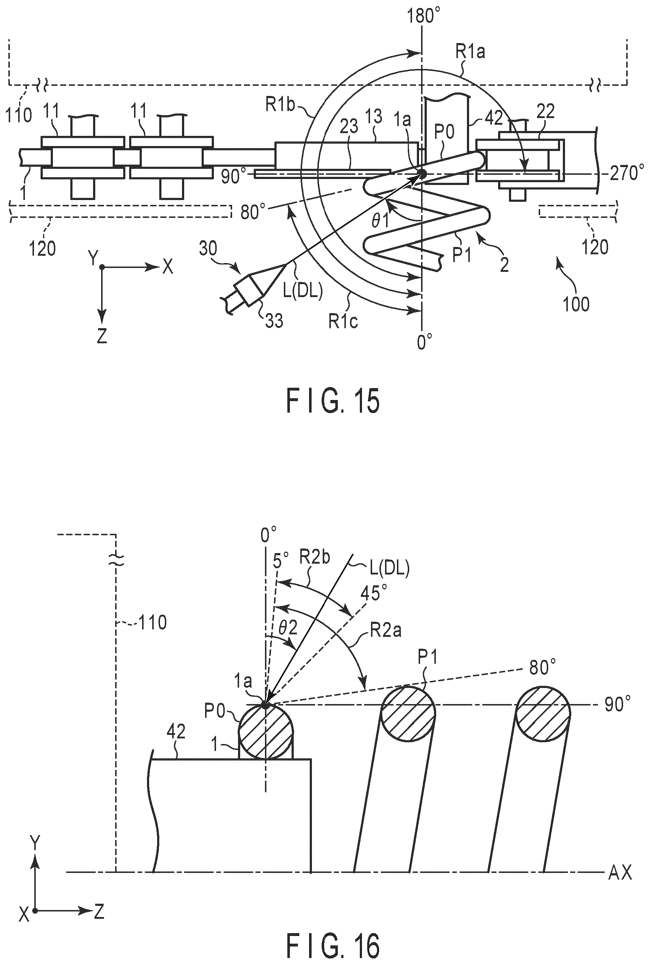

FIG. 15 is a schematic plan view in which the coiling machine 100 is viewed parallel to the perpendicular direction Y. This figure shows the wire 1, driving rollers 11, wire guide 13, second formation roller 22, pitch tool 23 and mandrel 42 shown in FIG. 1 etc., and also shows the body 110 and cover 120 of the coiling machine 100 by broken lines.

The body 110 accommodates a drive source which supplies power to the feed unit 10, the helix formation unit 20, the cutting unit 40 and the like, the control unit 50 and the like. The body 110 supports the driving rollers 11, the wire guide 13, the second formation roller 22, the pitch tool 23, the mandrel 42 and the like, and is located on the opposite side of the formation direction Z relative to these elements. The cover 120 is located on the formation direction Z side relative to the driving rollers 11, the wire guide 13, the second formation roller 22, the pitch tool 23, the mandrel 42 and the like. In the example of FIG. 15, the cover 120 is not provided in the vicinity of the wire 1 which is bent into a helical shape. It should be noted that the coiling machine 100 may not comprise the cover 120.

In the plan view of FIG. 15, relative to the irradiation area 1a irradiated with laser light L on the surface of the wire 1, the formation direction Z is defined as 0°, and the opposite side of the feed direction X is defined as 90°, and the opposite side of the formation direction Z is defined as 180°, and the feed direction X is defined as 270°. Further, the angle formed by the irradiation direction DL of laser light L and the formation direction Z is defined as a first angle θ1. In the wire 1 (coil spring 2) formed into a helical shape, the portion located on the mandrel 42 is referred to as a zeroth turn P0, and the portion which is adjacent to the zeroth turn P0 in the formation direction Z is referred to as a first turn P1.

The first angle θ1 needs to be determined such that the laser head 33 or laser light L does not interfere with the coil spring 2 formed into a helical shape. In the example of FIG. 15, in a case where laser light L is emitted from the range of 270° to 360° (0°) to the irradiation area 1a, laser light L easily interferes with the first turn P1. In consideration of this matter, in the embodiment, the first angle θ1 is determined within range R1a which is greater than or equal to 0° and less than or equal to 270°.

In the range from 180° to 270°, the second formation roller 22 is provided. Since the second formation roller 22 is located near the irradiation area 1a, when the first angle θ1 is in this range, the laser head 33 and laser light L easily interfere with the second formation roller 22. In light of this matter, the first angle θ1 should be more desirably determined within range R1b which is greater than or equal to 0° and less than or equal to 180°. In a case where the first angle θ1 is in range R1b, the laser head 33 is located on the upstream side of the feed direction X relative to the irradiation area 1a.

It should be noted that, if the irradiation center O of laser light L is set on the downstream side of the circumferential direction Dθ (the opposite side of the feed direction X) relative to the end portion 42a of the mandrel 42 as shown in FIG. 12, and the first angle θ1 is determined within range R1b, the laser head 33 or laser light L does not easily interfere with the cutter 41, and thus, this setting is more effective.

In the range from 90° to 180°, the body 110 is provided. The pitch tool 23 is provided near 90°. In a case where the cover 120 is provided, the interference with this cover 120 also has to be avoided. Therefore, the first angle θ1 should be yet more desirably determined in the range which is greater than or equal to 0° and less than or equal to 80°.

FIG. 16 is a schematic partial cross-sectional view in which the coiling machine 100 is viewed parallel to the feed direction X. This figure shows, of the wire 1 (coil spring 2) which is bent into a helical shape and the mandrel 42, the portions located on the upper side than the central axis AX of the coil spring 2.

In the cross-sectional view of FIG. 16, relative to the irradiation area 1a irradiated with laser light L, the perpendicular direction Y is defined as 0°, and the formation direction Z is defined as 90°. Further, the angle formed by the irradiation direction DL of laser light L and the perpendicular direction Y is defined as a second angle θ2.

In a manner similar to that of the first angle θ1, the second angle θ2 needs to be determined such that the laser head 33 or laser light L does not interfere with each portion of the coiling machine 100 or the first turn P1. To avoid the interference with the body 110 and the wire 1 of the first turn P1 and the subsequent turns, the second angle θ2 is determined at least in the range which is greater than or equal to 0° and less than or equal to 90°.

The zeroth turn P0 is in contact with the first formation roller 21, the second formation roller 22, the pitch tool 23 and the mandrel 42. To the contrary, as the first turn P1 is released from the contact with these elements, the outside diameter of the first turn P1 and the subsequent turns could be greater than that of the zeroth turn P0 as shown in FIG. 16.

Since the cutter 41 is located immediately above the irradiation area 1a, it is difficult to set the second angle θ2 so as to be 0°. Further, to avoid the interference with the first turn P1 in which the outside diameter is greater than the zeroth turn P0, the second angle θ2 must be less than 90°. Therefore, the second angle θ2 should be desirably determined within range R2a which is greater than or equal to 5° and less than or equal to 80°.

In a case where the irradiation area 1a is located near the outermost circumference of the wire 1 on the mandrel 42 as shown in the example of FIG. 16, if the second angle θ2 is great, the irradiation area 1a may be enlarged, and the heating efficiency of the wire 1 could be decreased. Therefore, the second angle θ2 should be desirably as less even in range R2a as possible. For example, when the second angle θ2 is determined within range R2b which is greater than or equal to 5° and less than or equal to 45°, a good heating efficiency can be obtained.

It should be noted that there is no need to always satisfy the condition that the first angle θ1 belongs to one of ranges R1a, R1b and R1c and the condition that the second angle θ2 belongs to one of ranges R2a and R2b at the same time.

In the embodiment described above, of the wire 1 which is bent into a helical shape, the site (the heated site 1V) in which the temperature is increased by irradiation with laser light L is cut by the cutting unit 40 (the cutter 41 and the mandrel 42). Therefore, the shear force required for cutting becomes less. Thus, the wire 1 can be easily cut.

Further, when the irradiation direction DL of laser light L is determined as explained using FIG. 15 and FIG. 16, the effective layout of the laser head 33 and various elements is possible, and the interference with laser light L and various elements can be prevented, thereby increasing the heating efficiency of the wire 1.

The embodiment described above does not limit the scope of the present invention to the configuration disclosed in the embodiment. The present invention can be implemented by modifying the configuration disclosed in the embodiment in various ways.

For example, as a matter of course, the present invention can be implemented by modifying modes such as the configuration and layout of the elements provided in the coiling machine 100 in various ways depending on the need.

Each embodiment exemplarily shows the configuration in which the coiling machine 100 cuts the heated site 1V of the wire 1 using the cutter 41. The coiling machine 100 is not limited to this configuration. The heated site 1V of the wire 1 may be cut by cutting using a rotary cutting blade.

There are various forms for the coil spring 2 manufactured by the coiling machine 100. For example, the coil diameter and the pitch may be changed in the axial direction of the coil spring. In other words, the coil spring 2 manufactured by the coiling machine 100 may be a coil spring in various forms, such as a cylindrical coil spring, a barrel-shaped coil spring, a hourglass coil spring, a tapered coil spring, a variable pitch coil spring and a coil spring having a portion with a minus pitch. The first angle θ1 and second angle θ2 described above may be determined so as to be appropriate values such that laser light L does not interfere with the first turn P1 and the subsequent turns depending on the shape of the coil spring.

Each figure exemplarily shows the coiling machine 100 and the manufacturing method for manufacturing a clockwise coil spring which is wound clockwise from the terminal. The configuration disclosed in the present embodiment can be also applied to a coiling machine and a manufacturing method for manufacturing a counterclockwise coil which is wound counterclockwise from the terminal.

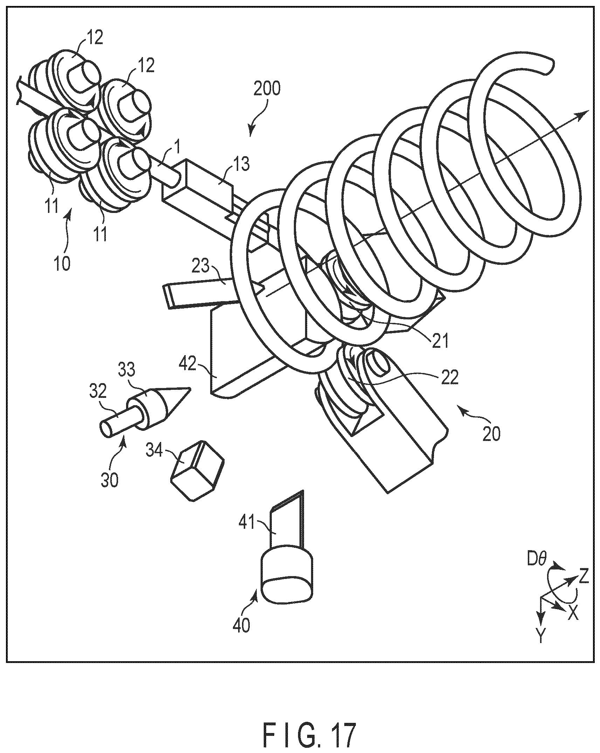

FIG. 17 is a schematic perspective view showing an example of a coiling machine 200 for manufacturing a counterclockwise coil spring. The coiling machine 200 comprises the same elements as the coiling machine 100. However, in the example of FIG. 17, the elements are provided in a positional relationship in which the layouts shown in FIG. 1, FIG. 2, FIG. 4, FIG. 5 and FIG. 10 are inverted up and down.

In the coiling machine 200 shown in FIG. 17, the definitions of the feed direction X, the perpendicular direction Y and the formation direction Z are the same as the examples of FIG. 1, FIG. 2, FIG. 4, FIG. 5 and FIG. 10. Thus, the conditions of the first angle θ1 and the second angle θ2 explained using FIG. 15 and FIG. 16 can be also applied to the coiling machine 200.

### Reference Signs List

1 ... Wire, 1V ... Heated site, 1P ... Melt pool, 1C ... Quench hardened portion, 1H ... Heat affected portion, 2 ... Coil spring, 10 ... Feed unit, 11 ... Driving roller, 12 ... Driven roller, 13 ... Wire guide, 20 ... Helix formation unit, 21 ... First formation roller, 22 ... Second formation roller, 23 ... Pitch tool, 30 ... Laser heater, 31 ... Laser oscillator, 32 ... Optical fiber, 33 ... Laser head, 34 ... Measurement device, 40 ... Cutting unit, 41 ... Cutter, 42 ... Mandrel, 50 ... Control unit, 51 ... Controller, 61 ... First terminal, 62 ... Second terminal, 100, 200 ... Coiling machine, L, L1, L2 ... Laser light, S01 ... Helix formation process, S02 ... Heating process, S03 ... Cutting process, M1 ... First irradiation trace, M2 ... Second irradiation trace, B ... Dent, X ... Feed direction, Y ... Perpendicular direction, Z ... Formation direction, Dθ ... Circumferential direction, DL ... Irradiation direction, θ1 ... First angle, θ2 ... Second angle

## Claims

1. A coiling machine comprising:
a feed unit configured to feed a wire in a feed direction;
a helix formation unit configured to bend the wire fed by the feed unit in a perpendicular direction orthogonal to the feed direction in series, thereby forming a coil spring extending into a helical shape toward a formation direction orthogonal to the feed direction and the perpendicular direction;
a laser heater configured to heat a portion of the wire by emitting laser light to the wire which is bent by the helix formation unit; and
a cutting unit configured to cut a site of the wire heated by the laser light, wherein
when, relative to an irradiation area irradiated with the laser light in the wire, the formation direction is defined as 0°, and an opposite side of the feed direction is defined as 90°, and an opposite side of the formation direction is defined as 180°, and the feed direction is defined as 270°, an irradiation direction of the laser light by the laser heater forms a first angle which is greater than or equal to 0° and less than or equal to 270° with the formation direction.

2. The coiling machine of claim 1, wherein
the first angle is greater than or equal to 0° and less than or equal to 180°.

3. The coiling machine of claim 2, wherein
the first angle is greater than or equal to 0° and less than or equal to 80°.

4. The coiling machine of one of claims 1 to 3, wherein
when, relative to the irradiation area, the perpendicular direction is defined as 0°, and the formation direction is defined as 90°, the irradiation direction forms a second angle which is greater than or equal to 5° and less than or equal to 80° with the perpendicular direction.

5. A coiling machine comprising:
a feed unit configured to feed a wire in a feed direction;
a helix formation unit configured to bend the wire fed by the feed unit in a perpendicular direction orthogonal to the feed direction in series, thereby forming a coil spring extending into a helical shape toward a formation direction orthogonal to the feed direction and the perpendicular direction;
a laser heater configured to heat a portion of the wire by emitting laser light to the wire which is bent by the helix formation unit; and
a cutting unit configured to cut a site of the wire heated by the laser light, wherein
when, relative to an irradiation area irradiated with the laser light in the wire, the perpendicular direction is defined as 0°, and the formation direction is defined as 90°, an irradiation direction of the laser light by the laser heater forms a second angle which is greater than or equal to 5° and less than or equal to 80° with the perpendicular direction.

6. The coiling machine of claim 5, wherein
the second angle is greater than or equal to 5° and less than or equal to 45°.

7. A coil spring manufacturing method comprising:
feeding a wire in a feed direction;
bending the fed wire in a perpendicular direction orthogonal to the feed direction in series, thereby forming a coil spring extending into a helical shape toward a formation direction orthogonal to the feed direction and the perpendicular direction;
heating a portion of the wire by emitting laser light to the bent wire; and
cutting a site of the wire heated by the laser light, wherein
when, relative to an irradiation area irradiated with the laser light in the wire, the formation direction is defined as 0°, and an opposite side of the feed direction is defined as 90°, and an opposite side of the formation direction is defined as 180°, and the feed direction is defined as 270°, an irradiation direction of the laser light forms a first angle which is greater than or equal to 0° and less than or equal to 270° with the formation direction.

8. The coil spring manufacturing method of claim 7, wherein
the first angle is greater than or equal to 0° and less than or equal to 180°.

9. The coil spring manufacturing method of claim 8, wherein
the first angle is greater than or equal to 0° and less than or equal to 80°.

10. The coil spring manufacturing method of one of claims 7 to 9, wherein
when, relative to the irradiation area, the perpendicular direction is defined as 0°, and the formation direction is defined as 90°, the irradiation direction forms a second angle which is greater than or equal to 5° and less than or equal to 80° with the perpendicular direction.

11. A coil spring manufacturing method comprising:
feeding a wire in a feed direction;
bending the fed wire in a perpendicular direction orthogonal to the feed direction in series, thereby forming a coil spring extending into a helical shape toward a formation direction orthogonal to the feed direction and the perpendicular direction;
heating a portion of the wire by emitting laser light to the bent wire; and
cutting a site of the wire heated by the laser light, wherein
when, relative to an irradiation area irradiated with the laser light in the wire, the perpendicular direction is defined as 0°, and the formation direction is defined as 90°, an irradiation direction of the laser light forms a second angle which is greater than or equal to 5° and less than or equal to 80° with the perpendicular direction.

12. The coil spring manufacturing method of claim 11, wherein
the second angle is greater than or equal to 5° and less than or equal to 45°.
